# EUROPEAN PATENT SPECIFICATION

(11) **EP 1 811 830 B1**
(45) Date of publication and mention of the grant of the patent: **17.12.2008**
(21) Application number: 05795111.3
(22) Date of filing: 14.10.2005
(51) Int. Cl.: A01B 77/00, A01B 33/10

(54) **APPARATUS AND METHOD FOR SOIL CULTIVATION**
BODENBEARBEITUNGSVORRICHTUNG UND -VERFAHREN
APPAREIL ET PROCEDE POUR LE TRAVAIL DU SOL

(30) Priority: 14.10.2004 NL 1027246
(43) Date of publication of application: 01.08.2007
(73) Proprietor: Gebr. Kraaijeveld B.V., NL-2992 SP Barendrecht (NL)
(72) Inventor: KRAAIJEVELD, Hendrik, Martijn, NL-2992 AB Barendrecht (NL)
(74) Representative: Grootscholten, Johannes A.M.
(86) International application number: PCT/NL2005/000744
(87) International publication number: WO 2006/041293

(56) References cited:
- WO-A-03/067957
- FR-A- 2 116 321
- GB-A- 2 142 511
- NL-A- 7 602 084
- US-A- 1 276 843
- US-A- 1 590 035
- US-A- 1 680 866
- US-A- 3 892 278

## Description

The present invention relates to an apparatus for soil cultivation, which ground-working apparatus, comprises a cutting device comprising a drive shaft and a number of cutting members mounted for rotation about the drive shaft, according to the preamble of claim 1.

Such apparatus are for instance used to cut away and remove the top layer of a ground surface. This takes place for instance to replace vegetation that is present. Because two successive knives display an overlap the whole ground surface is worked over the whole width of the apparatus.

During use the knives are heavily loaded as they are pushed through the ground which is scattered with for instance roots, stones and waste. The above mentioned overlap is realized in known ground-working apparatus by means of expensive bends in the knives. These bends are expensive, among other reasons, because they have to withstand the loads and must therefore be very robust.
Having knives with expensive bends is particularly disadvantageous because the knives have to be replaced now and again as they are subjected to wear.

From Dutch patent NL-1006225 a ground-working apparatus is known in which simple L-shaped knives are mounted on straight connecting elements extending from the drive shaft. These L-shaped knives are very robust and relatively cheap. The above mentioned overlap between two successive knives is realised with two mirror symmetric knives each mounted against a connecting element. Although the use of mirror symmetric L-shaped knives to display an overlap between two successive knives provide an improvement over the use of knives with expensive bends, a disadvantage of the use of these knives is that two types of knives are used. Both types of knives have to be held in stock, which increases stock costs. Furthermore, repeatedly the right type of knife has to be chosen during assembly or replacement of the knives. This process of choosing the right knife represents valuable assembly or replacement time.

It is an object of the present invention to obviate this disadvantage of the known ground-working apparatus.

The invention provides for this purpose a ground-apparatus in which the connecting element has an offset form and in which the knives are oriented in one and the same direction.

Such an apparatus has the advantage that the knives, fitted both to the right and left on the connecting elements, can be of identical form, which simplifies assembly and reduces stock costs.

In an embodiment of the ground-working apparatus according to the present invention two connecting elements which are mounted substantially opposite each other on the drive shaft have two bends in opposite directions. The overlap is hereby realized in relatively simple manner, wherein identical connecting elements can for instance be applied on either side of the rotation shaft.

Another disadvantage of the known ground-working apparatus is that the removal of the layer entails high transport and processing costs. To obviate this additional disadvantage of the known ground-apparatus in an embodiment according to the present invention a discharge conveyor is arranged substantially parallel to the axial direction of the cutting device on the side thereof to which the cut material is forced, wherein the discharge conveyor comprises separating means for separating cut material into a fraction of ground material which is returned by the separating means to the ground surface and a fraction of waste material which is discharged by means of the discharge conveyor. Such an apparatus has the advantage that only a fraction of the soil, such as remnants of vegetation, stones, waste and the like, is discharged and that useful parts are returned directly to the ground surface. This results in considerable savings in respect of transport costs and waste-processing costs, such as waste separation. In a further embodiment the discharge conveyor comprises a star sieve. Such a star sieve can function with a dual action. On the one hand it has a transporting action and on the other the reusable material can fall back to earth through openings in the sieve during this transport. The application of this sieve above the area of the ground surface being cut away provides the effect that the reusable material is carried back to the ground surface substantially without a displacing operation.

In a further embodiment according to the present invention the cutting device comprises height-adjusting means for setting the height per side of the device at the front and rear thereof by means of one operating member, wherein the operating member is connected to height-adjusting means which define the height of a cutter shaft relative to a vehicle. This has the advantage that the person performing operations with the apparatus can set the height in relatively simple manner. In known surface cutters four spindles are applied per cutter, whereby it is awkward to adjust the cutter correctly as a whole. It now suffices to set the cutter at the correct height on the left and right, and the correct outcome hereof can be checked by viewing from the front. Such an arrangement makes a possible motor height adjustment more advantageous since it is possible to suffice with two motors on either side of the apparatus. Operation of the height adjustment from the cab hereby becomes possible. In a further embodiment the height-adjusting means comprise per connection thereof to the vehicle a rotation arm which rotates about a rotation shaft, which rotation shaft is connected on one side to the vehicle and on the other side to a member. With such a construction a relatively advantageous embodiment which is simple to maintain and operate becomes possible.

In a further embodiment of a ground-apparatus according to the present invention the rotation shaft of the cutting device is positioned substantially transversely of the direction of travel. A large number of mutually adjacent knives with the combined action of a wide knife is hereby realized over substantially the width of the apparatus. In combination with the discharge conveyer the residual fraction to be discharged or waste fraction of the ground layer which is cut away can hereby be discharged laterally in practical manner. In such an arrangement the star sieve is further situated in practical manner behind the cutter, whereby the return fraction comes to lie precisely in the processing strip of the apparatus. No displacement operation is hereby required in order to position the return fraction on the ground surface.

The present invention further relates to a cutting device, for use in a ground-working apparatus, according to the present invention.

The present invention will be further explained hereinbelow on the basis of an embodiment and with reference to the accompanying figures, in which:
- Figure 1 shows a partly cut-away perspective view of the embodiment;
- Figure 2 is a view of an embodiment with an alternative adjusting mechanism;
- Figure 3 is a view of the knives and knife holders;
- Figure 4 is a view of a detail of figure 3;
- Figure 5 is a side view of an embodiment; and
- Figure 6 is a rear view of an embodiment.

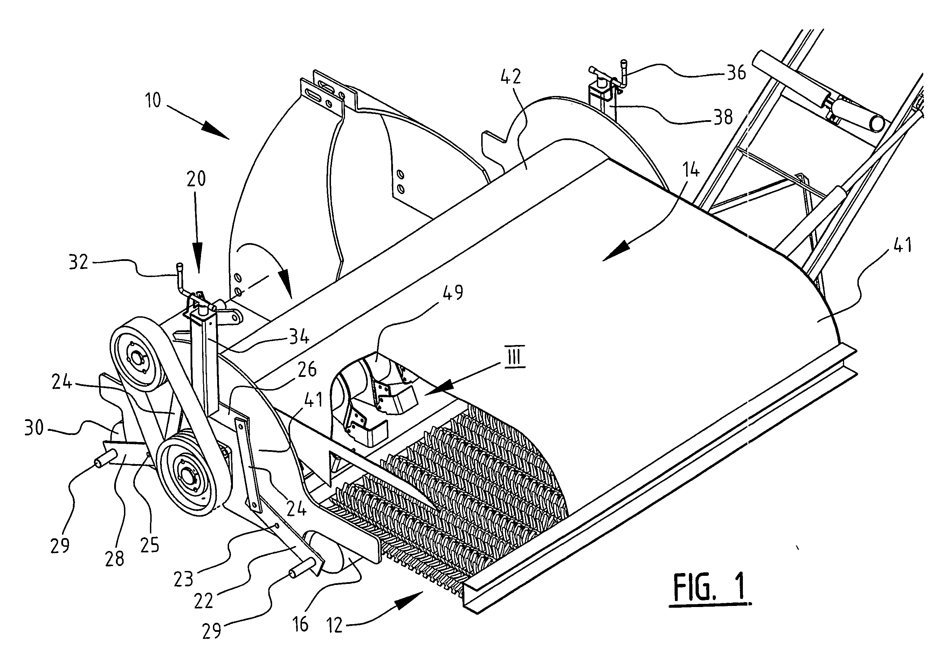

An embodiment (fig. 1) according to the present invention is a soil cutter 10 with a partial discharge, which has the advantage that a reusable fraction of the ground layer for cutting away falls back directly onto the ground. Costly transport and waste processing, such as separation of types of waste, is hereby reduced considerably.

The ground cutter comprises a surface cutter 14 which can be adjusted in the height by means of only two operating members 32,36 of height-adjusters 20. These are shown as hand-operated members, but an electrical operation can also be arranged.

Mounted at the rear of the surface cutter is a star sieve 12, all shafts of which rotate in the same direction, whereby waste is discharged in the rotation direction. A collecting hood is arranged on the top of this star sieve so that the scooped-up soil layer reaches the star sieve in controlled manner.

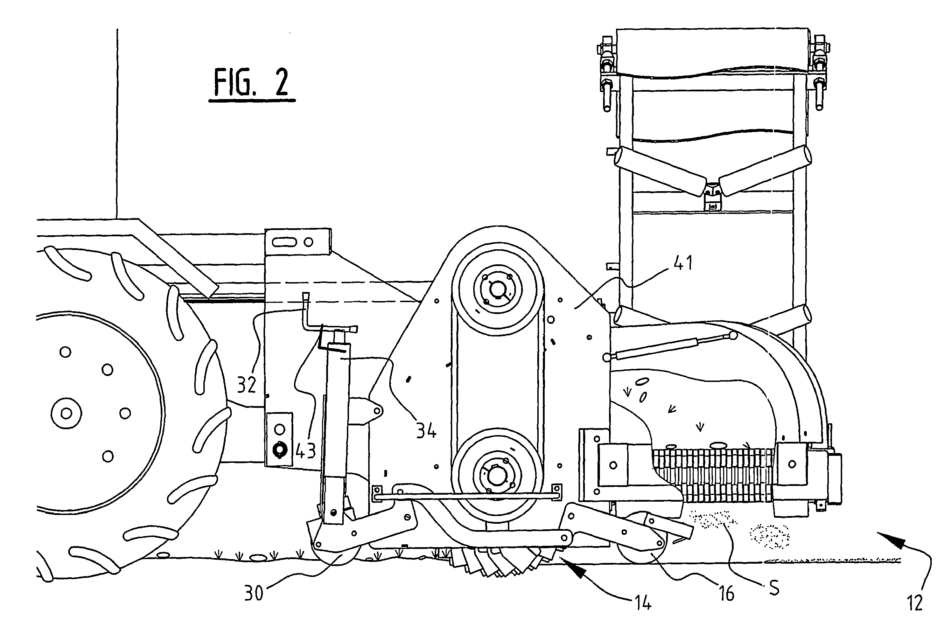

Height adjusters 20 are each provided with a spindle 34 operated by means of handles 32. Situated on the underside of spindle 34 is a T-rod 26 extending to two sides. Both the front side and rear side of the cutter are hereby adjusted in the height by means of a control operation. Tilting arms 22,28 are mounted rotatably on yoke 41 of the cutter by means of shaft or bolt 23, 25 respectively. Connecting rods 24 connect the T-rod to the two tilting arms 22,28. Moving of the T-rod 26 up or downward by means of the spindle causes a rotation of tilting arms 22,28, whereby yoke 41 of the cutter, and thereby the operating height of the cutter, is varied. For locking purposes the handles 32,36 are secured by means of respective clamps 42,43. In an alternative embodiment of height adjuster 20 (fig. 2) the height is adjusted by means of spindle arm 60. Arm 64 is set simultaneously to the correct height by means of connecting rod 62.

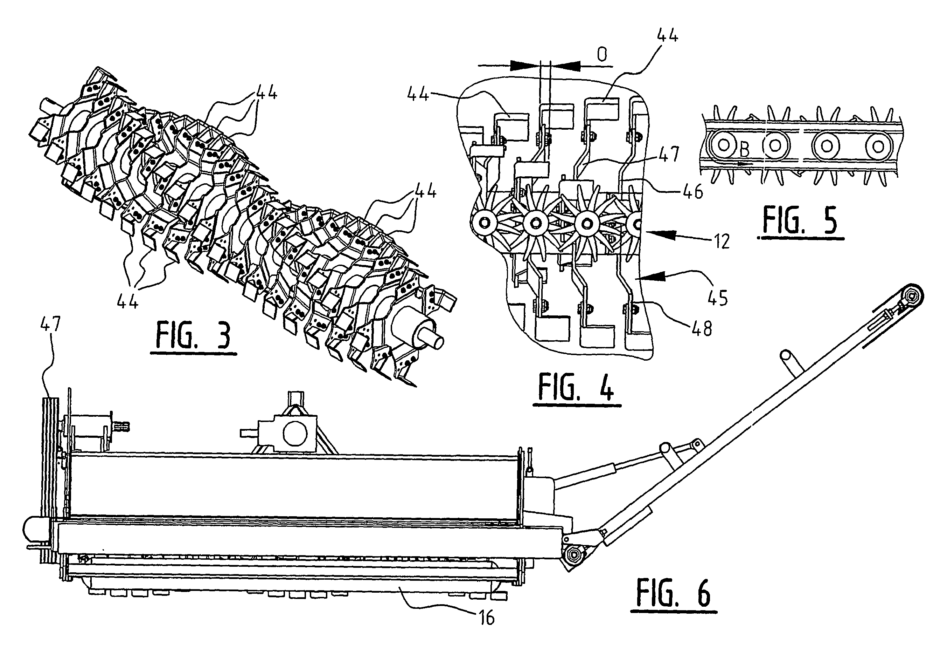

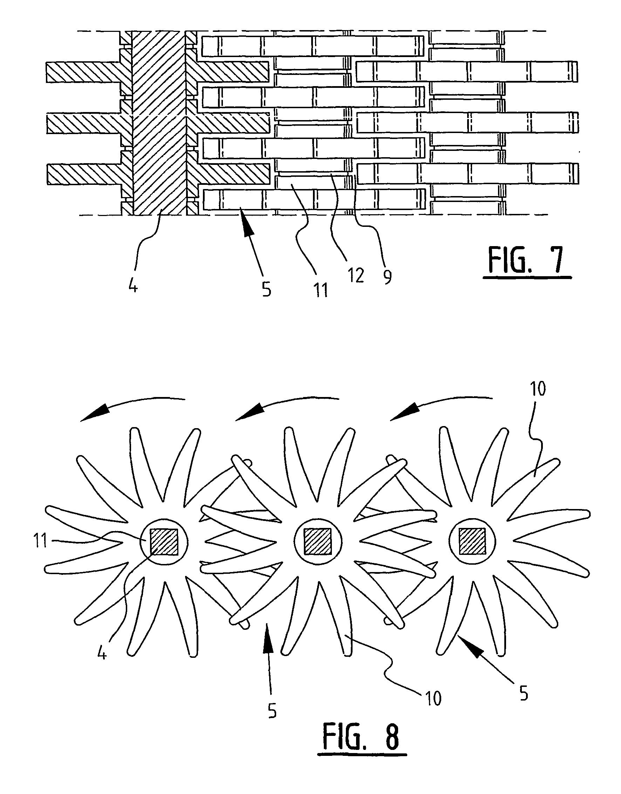

The assembly of knives 44 is shown in fig. 3 in combination with the connecting elements or knife holders 45, whereby the ground is worked over the whole width of the apparatus.

The cutter is driven by means of drive belt 47 which is driven in the direction of arrow A. The drive power herefor is obtained from the tractor by means of for instance a power take-off shaft. The rotor 49 of the cutter is hereby set into rotation. The soil is scooped up and inside hood 42 transported upward and rearward by means of knives 44 and, due to the speed at which this takes place, thrown onto star sieve 12. The shafts of the star sieve rotate in the direction of arrow B (fig. 5) for lateral discharge of the waste fraction (fig. 6).

Knife holders 45 are mounted on rotor 49 of the cutter by means of for instance welding or other method suitable for the purpose. A first part 46 of knife holders 45 extends straight relative to the rotor. The knife holders then have a transition part 47 for the purpose of obtaining a translation in lateral direction of the knife. On the end of the knife holder is situated a straight part 48 for the right-angled knives. If knives with another angle are applied, a different angle can be used in this part of the knife holder. The result is a horizontal cutting plane of the knife, wherein the knives display an overlap for the purpose of level cutting-away of the soil.

The present invention is not limited to the above described embodiment.

## Claims

1. Ground-working apparatus, comprising a cutting device (10) for cutting a layer from a ground surface, the cutting device (10) comprising:
- a drive shaft; and
- a number of cutting members mounted for rotation about the drive shaft,
wherein the cutting members comprise:
- a knife (44) having in use a horizontal cutting plane ; and
- a connecting element (45) extending from the drive shaft to the knife (44); and
wherein the connecting element (45) is designed such that two (44) knives (44), which in terms of operation thereof fit closely together in the cutter, display an overlap,
**characterized in that**
- the connecting element (45) has an offset form; and
- the knives (44) are oriented in one and the same direction.

2. Ground-working apparatus as claimed in claim 1, **characterized in that,**
two connecting elements (45) which are mounted substantially opposite each other on the drive shaft have two bends in opposite directions.

3. Ground-working apparatus as claimed in claim 1 or 2,
**characterized in that,**
- a discharge conveyor is arranged substantially parallel to the axial direction of the cutting device on the side thereof to which the cut material is forced, wherein
- the discharge conveyor comprises separating means for separating cut material into a fraction of ground material which is returned by the separating means to the ground surface and a fraction of waste material which is discharged by means of the discharge conveyor.

4. Ground-working apparatus as claimed in claim 3, wherein the discharge conveyor comprises a star sieve (12).

5. Ground-working apparatus as claimed in one or more of the claims 1-4, wherein the cutting device (10) comprises height-adjusting means (20) for setting the height per side of the device at the front and rear thereof by means of one operating member (32, 36), wherein the operating member (32, 36) is connected to height-adjusting means (20) which define the height of a cutter shaft relative to a vehicle.

6. Ground-working apparatus as claimed in claim 5, wherein the height-adjusting means (20) comprise per connection thereof to the vehicle a rotation arm which rotates about a rotation shaft, which rotation shaft is connected on one side to the vehicle and on the other side to a member.

7. Ground-working apparatus as claimed in one or more of the foregoing claims, wherein the rotation shaft of the cutting device (10) is positioned substantially transversely of the direction of travel.

8. Cutting device (10), for use in a ground-working apparatus, as claimed in one or more of the claims 1-7.

## Patentansprüche

1. Bodenbearbeitungsvorrichtung, die eine Schneidvorrichtung (10) umfasst, zum Schneiden einer Schicht von einer Bodenoberfläche, wobei die Schneidvorrichtung (10) umfasst:
eine Antriebswelle; und
eine Anzahl von Schneidelementen, die derart montiert sind, dass sie um die Antriebswelle herum rotieren,
wobei die Schneidelemente umfassen:
ein Messer (44), das im Einsatz eine horizontale Schnittebene aufweist; und
ein Verbindungselement (45), das sich von der Antriebswelle zu dem Messer (44) hin erstreckt; und
wobei das Verbindungselement (45) derart gestaltet ist, dass zwei Messer (44), die hinsichtlich ihres Betriebs nah zueinander in die Schneideinrichtung eingepasst sind, eine Überlappung aufweisen,
**dadurch gekennzeichnet, dass**
das Verbindungselement (45) eine versetzte Form aufweist; und
die Messer (44) in ein und derselben Richtung ausgerichtet sind.

2. Bodenbearbeitungsvorrichtung nach Anspruch 1,
**dadurch gekennzeichnet, dass**
zwei Verbindungselemente (45), die im Wesentlichen einander gegenüberliegend auf der Antriebswelle montiert sind, zwei Biegungen in entgegengesetzte Richtungen aufweisen.

3. Bodenbearbeitungsvorrichtung nach Anspruch 1 oder 2,
**dadurch gekennzeichnet, dass**
ein Abladeförderer im Wesentlichen parallel zu der axialen Richtung der Schneidvorrichtung auf derjenigen Seite derselben, zu welcher hin das abgeschnittene Material gedrückt wird, angeordnet ist, wobei
der Abladeförderer Trennmittel zum Trennen des abgeschnittenen Materials in einen Teil aus Bodenmaterial, das durch die Trennmittel auf die Bodenoberfläche zurück geführt wird, und einen Teil aus Abfallmaterial, das mithilfe des Abladeförderers abgeladen wird, zu trennen.

4. Bodenbearbeitungsvorrichtung nach Anspruch 3, bei welcher der Abladeförderer ein Sternsieb (12) umfasst.

5. Bodenbearbeitungsvorrichtung nach einem oder mehreren der Ansprüche 1 - 4, bei welcher die Schneidvorrichtung (10) Höheneinstellmittel (20) zum Einstellen der Höhe pro Seite der Vorrichtung an deren Vorderseite und Rückseite mithilfe eines Betätigungselements (32, 36) umfasst, wobei das Betätigungselement mit den Höheneinstellmitteln (20) verbunden ist, welche die Höhe einer Schneidwelle in Bezug auf ein Fahrzeug definieren.

6. Bodenbearbeitungsvorrichtung nach Anspruch 5, bei welcher die Höheneinstellmittel (20) pro Verbindung dieser mit dem Fahrzeug einen Dreharm umfassen, der sich um eine Rotationswelle dreht, wobei die Rotationswelle an einer Seite mit dem Fahrzeug und an der anderen Seite mit einem Element verbunden ist.

7. Bodenbearbeitungsvorrichtung nach einem oder mehreren der vorhergehenden Ansprüche, bei welcher die Rotationswelle der Schneidvorrichtung (10) im Wesentlichen quer zu der Bewegungsrichtung angeordnet ist.

8. Schneidvorrichtung (10) zur Verwendung in einer Bodenbearbeitungsvorrichtung gemäß einem oder mehreren der Ansprüche 1 - 7.

## Revendications

1. Appareil pour le travail du sol, comprenant
un dispositif de coupe (10) pour couper une couche d'une surface du sol, le dispositif de coupe (10) comprenant :
un arbre d'entraînement ; et
un nombre d'éléments de coupe montés pour tourner autour de l'arbre d'entraînement,
où les éléments de coupe comprennent :
un couteau (44) ayant lors de l'utilisation un plan de coupe horizontal ; et
un élément de liaison (45) s'étendant de l'arbre d'entraînement au couteau (44) ; et
où l'élément de liaison (45) est conçu de sorte que deux couteaux (44), qui en condition de fonctionnement sont agencés étroitement l'un de l'autre dans le mécanisme de coupe, présentent un chevauchement, **caractérisé en ce que**
l'élément de liaison (45) a une forme décalée ; et
les couteaux (44) sont orientés dans une seule et même direction.

2. Appareil pour le travail du sol selon la revendication 1, **caractérisé en ce que** les deux éléments de liaison (45) qui sont montés de manière sensiblement opposée l'un à l'autre sur l'arbre d'entraînement ont deux courbures dans des directions opposées.

3. Appareil pour le travail du sol selon la revendication 1 ou 2, **caractérisé en ce que,**
un convoyeur d'évacuation est agencé sensiblement parallèlement à la direction axiale du dispositif de coupe sur le côté de celui-ci vers lequel le matériau coupé est poussé, où
le convoyeur comprend des moyens de séparation pour séparer le matériau coupé en une partie de matériau du sol qui est renvoyée par les moyens de séparation à la surface du sol et une partie de matériau de déchet qui est évacuée au moyen du convoyeur d'évacuation.

4. Appareil pour le travail du sol selon la revendication 3, dans lequel le convoyeur d'évacuation comprend un tamis d'étoiles (12).

5. Appareil pour le travail du sol selon l'une ou plusieurs des revendications 1 à 4, dans lequel le dispositif de coupe (10) comprend des moyens d'ajustement de hauteur (20) pour régler la hauteur de côté du dispositif à l'avant et à l'arrière de celui-ci au moyen d'un élément d'actionnement (32, 36), où l'élément d'actionnement (32, 36) est relié aux moyens d'ajustement de hauteur (20) qui définissent la hauteur d'un arbre de mécanisme de coupe par rapport à un véhicule.

6. Appareil pour le travail du sol selon la revendication 5, dans lequel les moyens d'ajustement de hauteur (20) comprennent par leur liaison au véhicule un bras de rotation qui tourne autour d'un arbre de rotation, lequel bras de rotation est relié sur un côté au véhicule et sur l'autre côté à un élément.

7. Appareil pour le travail du sol selon l'une ou plusieurs des revendications précédentes, dans lequel le bras de rotation du dispositif de coupe (10) est positionné sensiblement transversalement à la direction de déplacement.

8. Dispositif de coupe (10), pour une utilisation dans un appareil pour le travail du sol, selon l'une ou plusieurs des revendications 1 à 7.
